# EUROPÄISCHE PATENTANMELDUNG

(11) **EP 2 634 381 A1**
(43) Veröffentlichungstag der Anmeldung: **04.09.2013**
(21) Anmeldenummer: 12157273.9
(22) Anmeldetag: 28.02.2012
(51) Int. Cl.: F01D 25/30, F02C 6/08

(54) **Gasturbine mit einem Abgas-Diffusor und Stützrippen**

(71) Anmelder: Siemens Aktiengesellschaft, 80333 München (DE)
(72) Erfinder: Bröker, Marc, 46535 Dinslaken (DE); Buchal, Tobias, 40489 Düsseldorf (DE)

(57) **Zusammenfassung**

Die Erfindung betrifft eine Gasturbine (10) mit einem sich an eine Turbineneinheit (24) anschließenden Abgas-Diffusor (21), dessen Diffusorkanal (33) von einer Kanalwand (40) außen begrenzt ist und an der eine Anzahl von sich nach innen erstreckenden hohlen Stützrippen (35) zur Befestigung eines Radiallagers (51) der Gasturbine (10) vorgesehen sind, wobei am Abgas-Diffusor (21) zumindest eine Rohrleitungen umfassende Abblaseleitung (47) für Abblaseluft ausströmseitig endet, dessen einströmseitiges Ende mit einem Verdichter (18) der Gasturbine (10) verbunden ist. Um insbesondere im Teillastbetrieb die Fehlanströmung der Stützrippen (35) zumindest teilweise zu kompensieren, ist vorgesehen, dass das ausströmseitige Ende der Abblaseleitung (47) mit dem Hohlraum (45) der Stützrippen (35) strömungstechnisch verbunden ist und die Stützrippen (35) Öffnungen (49) zum Ausblasen der Abblaseluft in den Diffusorkanal (33) aufweist.

## Beschreibung

Die Erfindung betrifft eine Gasturbine mit einem sich an eine Turbineneinheit anschließenden Abgas-Diffusor, dessen Diffusorkanal von einer Wand außen begrenzt ist und an der eine Anzahl von sich nach Innen erstreckenden hohlen Stützrippen zur Befestigung eines Radiallagers der Gasturbine vorgesehen sind, wobei am Abgas-Diffusor zumindest eine Rohrleitungen umfassende Abblaseleitung für Abblaseluft ausströmseitig endet, dessen einströmseitiges Ende mit einem Verdichter der Gasturbine verbunden ist.

Gasturbinen und deren Betriebsweisen sind aus dem umfangreich verfügbaren Stand der Technik bestens bekannt. Sie umfassen stets einen Abgas-Diffusor als Teil einer Abgasstrecke, durch den das aus der Gasturbine abströmende Abgas weitergeführt werden kann. Das Abgas wird entweder zu einem Schornstein geführt, sofern die Gasturbine zum Alleinbetrieb, im Englischen Simple Cycle genannt, vorgesehen ist. Bei einem GuD-Kraftwerk - im Englischen Combined Cycle genannt - führt die Abgasstrecke das Abgas zu einem Kessel, mit dessen Hilfe die im Abgas enthaltene thermische Energie in Dampf für eine Dampfturbine umgewandelt wird.

Der Betriebspunkt des Abgas-Diffusors hängt in erster Linie von seinem Volumenstrom ab. Dieser wird bekanntermaßen hauptsächlich von der Umgebungstemperatur, der Verdichter-Einlassleitschaufelstellung sowie der Befeuerungstemperatur beeinflusst.

Der Abgas-Diffusor sollte mehrere Anforderungen erfüllen: Zum Einen ist ein maximaler Druckrückgewinn zur Erzielung eines maximalen Wirkungsgrades im Auslegungspunkt erforderlich. Gleichzeitig soll der Wirkungsgrad bei Entfernung vom Auslegungspunkt nach Möglichkeit nur geringfügig abfallen. Zum Anderen sollte er kein instationäres Betriebsverhalten aufweisen, was ansonsten die mechanische Integrität der Kraftwerksanlage durch Schwingungsanregung beeinträchtigen könnte. Darüber hinaus sollte er eine möglichst gleichmäßige Geschwindigkeitsverteilung am Austritt zur Erreichung eines guten Kesselwirkungsgrades aufweisen. Ebenso bedeutsam ist die Vermeidung von Flip-Flop-Effekten bei Änderung des Betriebspunktes während des tiefen Teillastbetriebs. Schlussendlich sollte der Abgas-Diffusor zudem auch kleinbauend und somit kostengünstig sein.

Von besonderer Bedeutung für eine optimale Diffusorströmung ist das Vermeiden von Ablöse- und Rückströmzonen, sowohl an der Außenwand als auch am Übergang vom Abgas-Diffusor zum Kesseleinlauf. Sofern diese dennoch auftreten, sollte ihre Größe vergleichsweise klein sein. Die Ablösungen an der Innenfläche der glatten Diffusor-Außenwand sind zumeist verursacht durch eine zu geringe lokale Strömungsenergie, die dem stromab ansteigenden Druck nicht entgegenwirken kann. Ursächlich hierfür ist neben dem Öffnungswinkel des Diffusors die Abströmung an der letzten Turbinenlaufschaufelreihe und insbesondere die Überströmung an deren Schaufelspitzen. Rückstromzonen können sich ggf. im Teillastbetrieb ausbilden, insbesondere hinter der Nabe und an der Außenwand. Dabei können Sie so weit stromab reichen, dass es selbst im Bereich des Kesseleintritts zu Zonen stromauf gerichteter Strömung kommt. Bei der Verwendung von Nachbrennern kann durch Rückströmungen ein Flammenrückschlag erzeugt werden, was die kombinierte Betriebsweise von Gasturbinen und Nachbrennern einschränken könnte.

Um diesen aerodynamischen Phänomenen entgegenzuwirken ist es bekannt, im Teillastbetrieb der Gasturbine der Diffusorströmung Teile des Verdichtermassenstroms über Verdichterentnahmen und mehrere Abblaseleitungen direkt zuzuführen. Dabei sind die Mündungen der Abblaseleitungen in den Diffusor meist kostenmäßig optimiert, so dass diese eher diagonal auf der Mantelfläche des Diffusors angeordnet sind. Durch die Ausblasung an wenigen Umfangsstellen kommt es innerhalb der Diffusorströmung zudem zu kalten Strähnen. Im Zusammenhang mit einer instationären Strömung im Diffusor führt dies zu einer instationären thermischen Beanspruchung der Diffusorwände und begünstigt so die Rissbildung dort.

Aufgabe der Erfindung ist daher die Bereitstellung einer Gasturbine mit einem sich an eine Turbineneinheit anschließenden Abgas-Diffusor, welcher den im Stand der Technik genannten Problemen entgegenwirken kann.

Die auf die Gasturbine gerichtete Aufgabe wird mit einer solchen gemäß den Merkmalen des Anspruchs 1 gelöst. Vorteilhafte Ausgestaltungen sind in den Unteransprüchen angegeben und können in beliebiger Weise miteinander kombiniert werden.

Erfindungsgemäß ist vorgesehen, dass bei der eingangs bezeichneten Gasturbine das ausströmseitige Ende der Abblaseleitung mit dem Hohlraum der Stützrippen strömungstechnisch verbunden ist und die Stützrippen Öffnungen zum Ausblasen der Abblaseluft in den Diffusorkanal aufweisen. Durch die Führung der Abblaseluft in die Stützrippen des hinteren Lagersterns und die vorzugsweise Ausblasung an der Abströmkante der Stützrippen kann die Abblaseluft gezielt dafür genutzt werden, im Teillastbetrieb die Ablösungen an den dann stark fehlangeströmten Stützrippen zu reduzieren. Ferner lässt sich auf diese Weise der von den Stützrippen gebildete Lagerstern und Teile davon - beispielsweise deren Blechumkleidung - gezielt kühlen. Dies ermöglicht eine Anhebung der Turbinenaustrittstemperatur im Teillastbetrieb, verglichen mit dem Nennlastbetrieb, wodurch im Teillastbetrieb wiederum dem Absinken der Flammentemperatur und dem damit verbundenen Ansteigen der CO-Werte des Abgases entgegengewirkt werden kann.

Gemäß einer ersten vorteilhaften Weiterbildung kann die Abblaseluft gezielt nabenseitig ausgeblasen werden, um die Rückströmzone hinter der Nabe zu reduzieren oder um als Coanda-Strahl die Ablöseneigung an einem ggf. konisch zulaufenden Nabenende zu reduzieren. Es sei bemerkt, dass die Ausblasung durch die Nabe auch unabhängig von der Ausblasung der Abblaseluft durch die in den Stützrippen angeordneten Öffnungen vorgesehen sein kann.

Die Erfindung wird anhand einer einzigen Figur näher erläutert. Das einzige Ausführungsbeispiel zeigt eine Gasturbine in einem Längsteilschnitt.

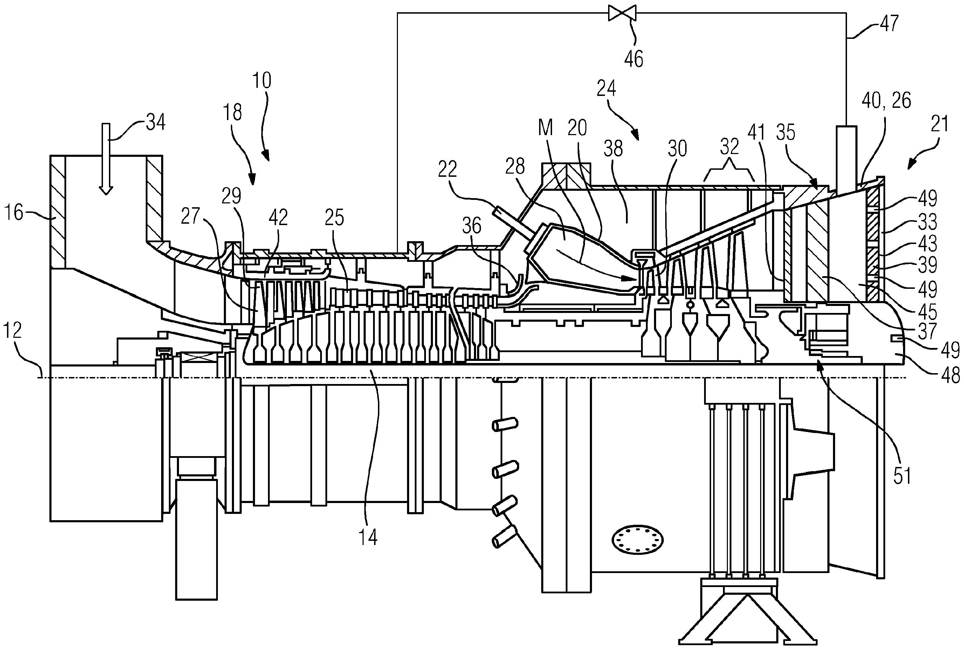

Figur 1 zeigt eine stationäre Gasturbine 10 in einem Längsteilschnitt. Die Gasturbine 10 weist im Innern einen um eine Rotationsachse 12 drehgelagerten Rotor 14 auf, der auch als Turbinenläufer bezeichnet wird. Entlang des Rotors 14 folgen aufeinander ein Ansauggehäuse 16, ein Axialturboverdichter 18, eine torusartige Ringbrennkammer 20 mit mehreren rotationssymmetrisch zueinander angeordneten Brennern 22, eine Turbineneinheit 24 und ein Turbinenausgangsgehäuse 26. An das Turbinenausgangsgehäuse 26 der Gasturbine 10 schließt sich ein nicht weiter dargestellter Turbinen-Abgas-Verteiler an. Beide Komponenten sind Teil des Gasturbinen-Abgas-Diffusors 21. Anstelle der Ringbrennkammer kann die Gasturbine auch mit mehreren Rohrbrennkammern ausgestattet sein.

Der Axialturboverdichter 18 umfasst einen ringförmig ausgebildeten Verdichterkanal mit darin kaskadisch aufeinanderfolgenden Verdichterstufen aus Laufschaufel- und Leitschaufelkränzen. Die am Rotor 14 angeordneten Laufschaufeln 27 liegen mit ihren frei endenden Schaufelblattspitzen einer äußeren Kanalwand des Verdichterkanals gegenüber. Der Verdichterkanal mündet über einen Verdichterausgangsdiffusor 36 in einem Plenum 38. Darin ist die Ringbrennkammer 20 mit ihrem Verbrennungsraum 28 vorgesehen, der mit einem ringförmigen Heißgaskanal 30 der Turbineneinheit 24 kommuniziert. In der Turbineneinheit 24 sind vier hintereinandergeschaltete Turbinenstufen 32 angeordnet. Am Rotor 14 ist ein Generator oder eine Arbeitsmaschine (jeweils nicht dargestellt) angekoppelt.

An das Turbinenausgangsgehäuse 26 der Gasturbine 10 schließt sich ein Turbinen-Abgas-Verteiler an. Beide Komponenten sind Teil des Gasturbinen-Abgas-Diffusors 21. Stromab des Turbinen-Abgas-Verteilers ist ein ebenso nicht weiter dargestelltes Abgas-Gas-System vorgesehen. Dieses und der Gasturbinen-Abgas-Diffusor 21 bilden das Abgas-Diffusor-System.

Im Gasturbinen-Abgas-Diffusor 21 ist ein einströmseitig ringförmiger Diffusorkanal 33 vorgesehen, der radial außen von einer konischen Kanalwand 40 begrenzt ist. An der Kanalwand 40 sind entlang des Umfangs des Diffusorkanals 33 sechs Stützrippen 35 verteilt, von denen lediglich eine im Längsschnitt dargestellt ist. Es kann auch eine andere Anzahl an Stützrippen vorhanden sein. Jede Stützrippe 35 weist in ihrem Inneren eine Stütze 37 auf, welche durch eine Blechumkleidung 39 vor dem direkten Kontakt mit Abgas geschützt ist. Die Blechumkleidung 39 weist eine Anströmkante 41 und eine Abströmkante 43 auf, wobei diese analog der Profilkontur eines Schaufelblatts einer Verdichterschaufel im Querschnitt aerodynamisch profiliert ist. An den inneren Enden der Stützrippen 35 ist eine Nabe 48 angeordnet, welche ein Gehäuse für ein im Inneren angeordnetes turbinenseitiges Radiallager 51 bildet. Trotz der Stütze 37 ist im Inneren der Blechumkleidung 39 noch ein Hohlraum 45 vorhanden. Diesem ist über eine Abblaseleitung 47 ein Teil des Verdichtermassenstroms zuführbar. Die Abblaseleitung 47 umfasst drei Rohrleitungen, von denen lediglich eine Rohrleitung dargestellt ist. Es können auch mehr als drei oder weniger Rohrleitungen vorgesehen sein. Die nicht dargestellten Rohrleitungen sind entlang des Umfangs der Gasturbine 10 verteilt. In jeder Rohrleitung ist zudem ein Ventil als Stellorgan 46 zum Schließen und teilweisem oder vollständigem Öffnen der Rohrleitungen vorgesehen. Alle Rohrleitungen verbinden den Verdichter 18 oder das Plenum 38 mit den Hohlräumen 45, um diesen Abblaseluft zuzuführen.

In der Abströmkante 43 der Stützrippe 35 und/oder im stromabwärtigen Bereich der konvexen Saugseite der Stützrippen (35) sind mehrere Öffnungen 49 vorgesehen, über die die der Stützrippe 35 zugeführte Abblaseluft in den Diffusorkanal 33 eingebracht werden kann. Auch unabhängig von dem Vorhandensein der Öffnungen 49 in den Stützrippen 35 können in der Nabe 48 Öffnungen 49 zum Ausblasen von Abblaseluft vorgesehen sein. Insbesondere letztere Ausgestaltung eignet sich dazu, Rückströmzonen stromab der Nabe 48 zu vermeiden.

Im Betrieb der Gasturbine 10 saugt der Axialturboverdichter 18 durch das Ansauggehäuse 16 als zu verdichtendes Medium Umgebungsluft 34 an und verdichtet diese. Die verdichtete Luft wird durch den Verdichterausgangsdiffusor 36 in das Plenum 38 geführt, von wo aus es in die Brenner 22 einströmt. Über die Brenner 22 gelangt auch Brennstoff in den Verbrennungsraum 28. Dort wird der Brennstoff unter Zugabe der verdichteten Luft zu einem Heißgas M verbrannt. Das Heißgas M strömt anschließend in den Heißgaskanal 30, wo es sich arbeitsleistend an den Turbinenschaufeln der Turbineneinheit 24 entspannt. Die währenddessen freigesetzte Energie wird vom Rotor 14 aufgenommen und einerseits zum Antrieb des Axialturboverdichters 18 und andererseits zum Antrieb einer Arbeitsmaschine oder elektrischen Generators genutzt.

Der Betrieb der Gasturbine 10 ist so ausgestaltet, dass im Nennlastbetrieb lediglich eine derartige Menge an Abblaseluft aus den Öffnungen 49 ausströmt wie es zur Vermeidung von einem Eindringen des Abgases in die Öffnungen 49 erforderlich ist. Wird die abgegebene Leistung der Gasturbine unter einen vorbestimmten Wert abgesenkt, werden die in der Abblaseleitung 47 angeordneten Stellorgane 46 weiter geöffnet, so dass der Abblasemassenstrom signifikant zunimmt. Der vorbestimmte Wert kann beispielsweise 80%, 70%, 50% oder auch einen anderen Prozentsatz der Gasturbinen-Nennleistung betragen. Durch diese Maßnahme können einerseits Ablösungen an den Stützrippen 35 vermieden werden, welche im Teillastbetrieb wegen einer Fehlanströmung wegen eines verringerten Abgas-Massenstroms auftreten können. Zudem wird der prozentuale Anteil an Verbrennungsluft im Brennstoff-Luft-Gemisch reduziert, was zu einer höheren Verbrennungstemperatur führt und CO-Emissionen auf einen geringeren Wert halten kann. Durch das Ausblasen der Abblaseluft durch die Nabe 48 können zudem Rückströmzonen stromab der Nabe 48 vermieden werden.

Insgesamt wird mit der Erfindung eine Gasturbine 10 mit einem sich an eine Turbineneinheit 24 anschließenden Abgas-Diffusor 21 vorgeschlagen, dessen Diffusorkanal 33 von einer Kanalwand 40 außen begrenzt ist und an der eine Anzahl von sich nach innen erstreckenden hohlen Stützrippen 35 zur Befestigung eines Radiallagers 51 der Gasturbine 10 vorgesehen sind, wobei am Abgas-Diffusor 21 zumindest eine Rohrleitungen umfassende Abblaseleitung 47 für Abblaseluft ausströmseitig endet, dessen einströmseitiges Ende mit einem Verdichter 18 der Gasturbine 10 verbunden ist. Um insbesondere im Teillastbetrieb den durch die Fehlanströmung der Stützrippen 35 ausgelösten Wirkungsgradverlust zumindest teilweise zu kompensieren, ist vorgesehen, dass das ausströmseitige Ende der Abblaseleitung 47 mit dem Hohlraum 45 der Stützrippen 35 strömungstechnisch verbunden ist und die Stützrippen 35 Öffnungen 49 zum Ausblasen der Abblaseluft in den Diffusorkanal 33 aufweist.

## Patentansprüche

1. Gasturbine (10) mit einem sich an eine Turbineneinheit (24) anschließenden Abgas-Diffusor (21), dessen Diffusorkanal (33) von einer Kanalwand (40) außen begrenzt ist und an der eine Anzahl von sich nach innen erstreckenden hohlen Stützrippen (35) zur Befestigung eines Radiallagers (51) der Gasturbine (10) vorgesehen sind,
wobei am Abgas-Diffusor (21) zumindest eine Rohrleitungen umfassende Abblaseleitung (47) für Abblaseluft ausströmseitig endet, dessen einströmseitiges Ende mit einem Verdichter der Gasturbine (10) verbunden ist,
**dadurch gekennzeichnet**, das
das ausströmseitige Ende der Abblaseleitung (47) mit dem Hohlraum der Stützrippen (35) strömungstechnisch verbunden ist und die Stützrippen (35) Öffnungen (49) zum Ausblasen der Abblaseluft in den Diffusorkanal (33) aufweisen.

2. Gasturbine (10) nach Anspruch 1,
bei der die Öffnungen (49) an den Stützrippen (35) ausschließlich nabenseitig verteilt sind.

3. Gasturbine (10) nach Anspruch 1 oder 2,
bei der die Öffnungen (49) an einer Abströmkante der Stützrippen (35) und/oder im stromabwärtigen Bereich der konvexen Saugseite der Stützrippen (35) angeordnet sind.

4. Gasturbine (10) nach Anspruch 1, 2 oder 3,
bei der die Stützrippen (35) an ihrem inneren Ende eine Nabe (48) aufweisen, an deren axialen Ende weitere Öffnungen (49) zum Ausblasen der Abblaseluft in den Diffusorkanal vorgesehen sind.
